# EUROPEAN PATENT APPLICATION

(11) **EP 0 570 781 A2**
(43) Date of publication of application: **24.11.1993**
(21) Application number: 93107426.4
(22) Date of filing: 07.05.1993
(51) Int. Cl.: H04N 5/21, H04N 11/00

(54) **Procedure and means for attenuating noise from a HD-MAC signal**

(30) Priority: 20.05.1992 FI 922295
(71) Applicant: NOKIA TECHNOLOGY GmbH, D-75175 Pforzheim (DE)
(72) Inventor: Aho, Outi, SF-33720 Tampere (FI); Lehtonen, Arto, SF-33700 Tampere (FI); Juhola, Janne, SF-33720 Tampere (FI)

(57) **Abstract**

The invention relates to a procedure for attenuating noise from a HD-MAC signal in a HD-MAC receiver decoder, in which a received video signal is stored in memories (2), the samples stored in the memories (2) being read and processed so that the original, transmitted sub-sample pattern is produced. The sub-sample pattern thus produced is conducted into three signal processing branches. With a switch controlled by motion information (DATV), a sample pattern produced by one signal processing branch at a time is connected to the output of the decoder. From the video signal (s3) stored in the memories (2) noise is attenuated (7) by means of filtering, whereby after the sub-sampling, for filtering (7) the noise of the signal carried to the first signal processing branch, the received signal (s2) and at least one of the signals (s4-s7) obtained from the memories (2) are used, after the sub-sampling, for filtering the noise of the signal carried to the second and third signal processing branches, the received signal (s2) and at least one signal within the frame of the received signal (s2) obtained from the line memories of the Sub-Sample Restoration circuit (3) are used. The filtering is controlled by means of an external control signal (OHJ) and the motion information (DATV).

## Description

The present invention relates to a procedure and a means for attenuating noise from a HD-MAC signal in a HD-MAC receiver decoder.

The European High Definition Television has been developed as one sector of the European EUREKA project. The system definitions include a proposition for a HDTV production standard to determine the performance format of the programmes in studio environments, and a proposition for a transmission standard. Transmission is accomplished via a satellite or a cable using a MAC system which is not compatible with any conventional TV systems. For this reason, a specific decoder for receiving MAC transmissions is needed in prior art receivers. The image ratio according to the HDTV studio pick-up standards is 16:9, containing 1250 lines displayed at interlace ratio 2:1, (or later 1:1) and at 50 Hz frame frequency. Said HDTV image must, however, be compressed for the transmission in order to be compatible with current receivers provided with an MAC decoder. The image is encoded in transmission to be MAC compatible into a HD-MAC signal by compressing the signal into a fourth in a bandwidth reducing coder so that the original image can be returned in the receiver. The number of the transmission signal lines is thus half of the original, i.e. 625 lines, and the interlace ratio, 2:1. The input signal format for the coder reducing the bandwidth has currently been agreed to be 1250/2:1/50 Hz, but the interlace ratio will later be 1:1, so that the compression has to be further intensified. With a view to the receiver, also a so-called DATV signal contained in the HD-MAC signal is transmitted, mediating information about the motion content of the image. The compression is based on controlled subsampling monitored with the aid of the motion information. This means that the less motion is included in the image, the greater spatial resolution is used and when the motion content of an image is great, temporal resolution is increased at the expense of the spatial resolution.

In the above Bandwidth Reduction Encoder BRE, the image to be transmitted is divided into 16*16 pixel blocks which on the basis of the motion content therein are conducted into one of the three image processing branches. Each signal carried into a branch is provided with a sampling pattern of its own. If there is no movement, the signal is directed into a so-called 80 ms branch in which a sub-sampling pattern is taken from each frame of the image (decimation) so that half of the pixels of the final image are transmitted. Each line is sampled and the image thus decimated forms a quincunx sampling pattern. In this manner one half of the compression is provided and the other half is provided so that the transmission time of one image is raised from 40 ms to 80 ms. This is the explanation of the name. If slowly moving targets are contained in one image portion, a video signal to be compressed is directed into the 40 ms branch in which the transmission time of the frame is raised from 20 ms to 40 ms, and only every second of the quincunx subsampled frames is transmitted, i.e. only every second sample from every second frame is included. If an image comprises fast moving portions, the video signal to be compressed is conducted into the 20 ms branch in which the bandwidth reduction into one fourth is so carried out that each fourth sample of each original image frame is transmitted, that is, samples from each line of the original image are included. Each BRE branch comprises a lowpass filter specific thereto and a so-called "line-shuffling" function, in which the format of a 1250 line image (duration of line 32 µs) is converted to be compatible with the MAC system into 625 line format (duration of line 64 µs). In the 40 ms branch this function is included in the subsampling. On the basis of the information yielded by the motion detector, the switch connecting only one branch at a time to the output of the BRE is controlled. Said information about the branch in which the output signal is produced is encoded into a DATV signal, according to which the coder in the receiving end directs the signal into the right branch.

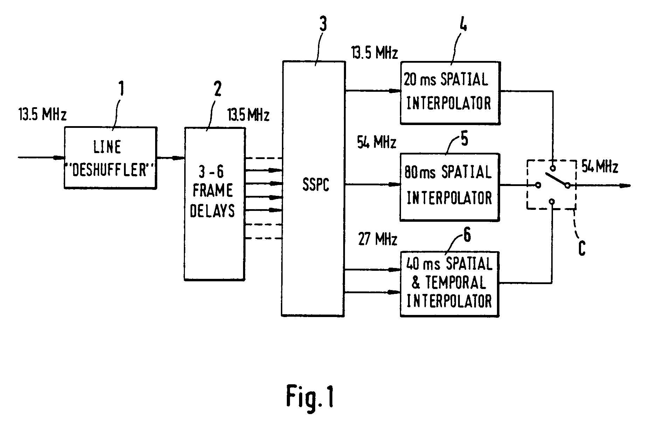

In the HD-MAC decoder of the receiver the compressed frame 625/2:1/50 Hz must be returned to the original HDTV format, i.e. into 1250/2:1/50 Hz. The decoder can be called a Bandwidth Restoration Decoder and it is analogous with the above-described BRE. The Bandwidth Restoration Decoder is described below more in detail referring to Fig. 1, and the description relates to the luminance signal. A received sample frequency is 13.5 MHz and the output frequency of the Bandwidth Restoration Decoder is 54 MHz. The decoder comprises a "line deshuffler" block 1, 3 to 6 pieces of frame memories 2 switched e.g. in cascade, a Sub-Sample Pattern Converter 3, and three interpolator branches 4, 5 and 6. Each interpolator branch yields a complete HDTV frame and the output of the selected branch is switched with a switch C into an output signal for the Bandwidth Restoration Decoder. The position of the switch is controlled by the motion information contained in the received DATV signal. Since the line frequency in the transmission has been reduced to 15.625 kHz, the line samples of the 20 ms, 40 ms and 80 ms branches have to be moved so that the original 31.25 kHs line frequency is obtained. This operation is carried out in block 1 so that a line from one incoming line is generated 2 in that each new line is composed of the every second samples of the incoming line. Subsequent to the deshuffling operation, the luminance signal is delayed in the frame memories 2. The frame signals are then processed in a Subsample Pattern Converter 3 which reconstructs the original sub-sampled patterns with the aid of the line memories. From the converter 3 the subsample patterns are conducted into the branches 4, 5 and 6 wherein the original HDTV frames are produced by interpolation. In the 40 ms branch the interpolation is motion-compensated and therein, motion vectors indicated in the DATV signal are made use of. Controlled by the DATV information, the switch C connects one of the branches at a time to the output of the Bandwidth Restoration Decoder, this operation yielding the original HDTV image in format 1250/2:1/50 Hz.

The chrominance signal is coded very much in the same way as the luminance information. Motion compensation is not, however, used and a DATV signal produced in processing the luminance is used also in coding the chrominance.

A signal obtained from the BRD may be processed further in order to increase its display frequency because a low frame frequency causes harmful flickering in the white frame and the 2:1 interlace causes line flicker, which features can be eliminated by increasing the frequency of the display. There are two fundamental means of increasing the display frequency. The frame frequency can be raised e.g. into 100 Hz, whereby the format is 2:1/100 Hz, or the interlace can be eliminated, i.e. the frame is converted into a progressive one, e.g. into format 1:1/50 Hz. The procedures can be divided into procedures in which no motion information is used, into motion adaptive procedures and into motion compensated procedures.

In the European HDTV, the transmission is accomplished by means of a satellite or cable utilizing the MAC system. The properties and non-linearities of the transmission channel employed cause noise in the received image. As regards the viewers, one of the most important factors affecting the quality of the television picture is the signal-noise ratio. The greatest signal-noise ratio that can be achieved is limited by various forms of noise affecting the picture, such as thermal noise, channel interference and drop-out noise. Because of the good image quality, bright picture tube and short viewing distance of the HDTV sets, the noise is particularly disturbing in said receivers. The most frequent types of noise are Gaussian noise and drop-out noise. Gaussian noise is formed in the image in every step of the transmission and the reception chain. Drop-out noise tends to occur particularly in satellite transmissions when the level of a signal drops below the threshold level of the FM detector. The drop-outs are seen on the screen typically in the form of short black and white lines, which in HD-MAC decoding are spread spatially and / or temporally, due to the effect of the line deshuffler and the Sub-Sample Pattern Converter SSPC and which in each image processing branch acquire a typical shape of their own. In processing the HD-MAC luminance in the 80 ms branch, a drop-out pulse spreads in the environment of two lines (because of the line deshuffling function) and the adjacent pixels (i.e. because of the SSPC and interpolators). The 40 ms branch is not provided with a "line deshuffling" block of its own but because of the motion compensated interpolation, the drop-out pulse spreads temporally into various frames and adjacent images. In the HD-MAC chrominance signal, the drop-out pulses spread on a larger area than in the luminance signal owing to a less frequent sampling. The drop-out pulse is seen as a stripe deviating in colour. Since the U and V components are transmitted in every second line in the MAC frame, the drop-outs are generally present only in every second component.

The object of the present invention is to provide a procedure, using which the noise in a HD-MAC signal can be attenuated, particularly the Gaussian and drop-out noise. Also a means for implementing the method of the invention is described here.

As taught by the invention, the noise attenuation is carried out in the HD-MAC decoder of the receiver, that is, in a Bandwidth Restoration Decoder, whereby from each signal entering any of the branches (20, 40 and 80 ms) the noise is attenuated. In the BRD, the motion information required in various forms of filtering immobile and mobile images is derived from a DATV signal. In the noise attenuation of the invention, noise detection is used for estimating the noise level from the image and for detecting the type of noise. On the basis of the information concerning the noise detection, an appropriate filter is selected for filtering the noise and the processing of the image is controlled; e.g. interpolators are controlled according to noise quantity and quality. The invention is characterized in that noise is attenuated from a video signal to be stored in memories by means of filtering, whereby
- after the sub-sampling, for filtering the noise of a signal to be carried to a first signal processing branch processing substantially stationary image portions, a received signal and at least one signal received from the memories are used,
- after the sub-sampling, for filtering the noise of a signal to be carried to a second signal processing branch processing slow-motion image portions and to a third, processing rapid-motion image portions, a received signal and at least one signal within the frame of the received signal obtained from the line memories of the Sub-Sample Pattern Converter circuit are used.

The invention is described below in detail, referring to the annexed drawings, in which:
Figure 1 presents a block diagram of decoder BRD of a HDTV receiver,
Fig. 2 presents generally a means implementing the procedure of the invention for a signal entering the 80 ms branch,
Fig. 3 presents a means implementing the embodiment of the procedure of the invention for a signal entering the 80 ms branch,
Fig. 4 presents generally a means implementing the procedure of the invention for a signal entering the 40 ms branch,
Fig. 5 presents generally a means implementing the procedure of the invention for a signal entering the 20 ms branch,
Fig. 6 shows an embodiment of a noise detector,
Fig. 7 shows more in detail an embodiment alternative of the noise attenuator according to the invention for a signal entering the 80 ms branch,
Figs 8A and 8B demonstrate noise detection from a chrominance signal, and
Fig. 9 presents an alternative for implementing the dropout noise filtering of a chrominance signal.

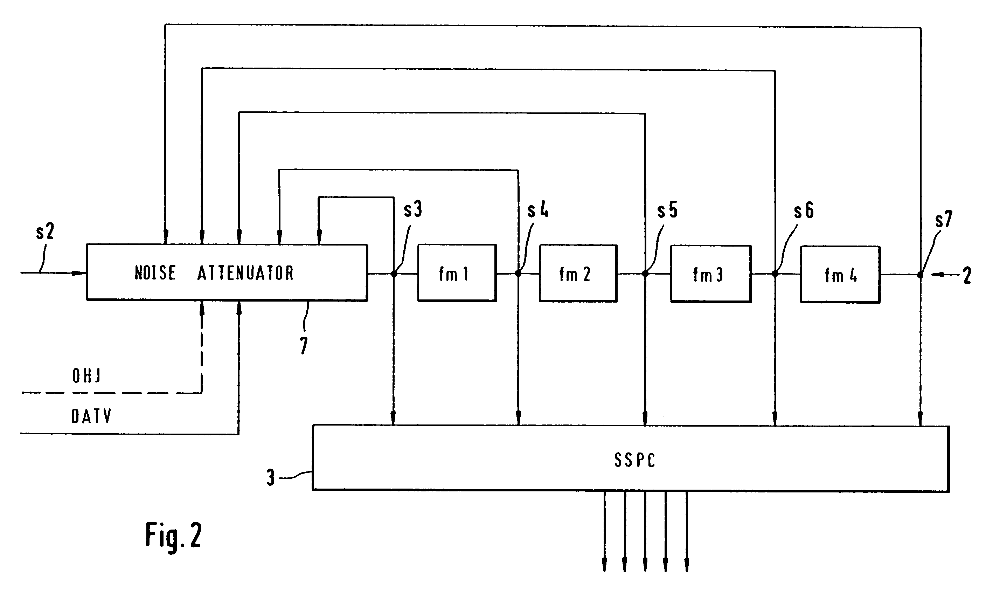

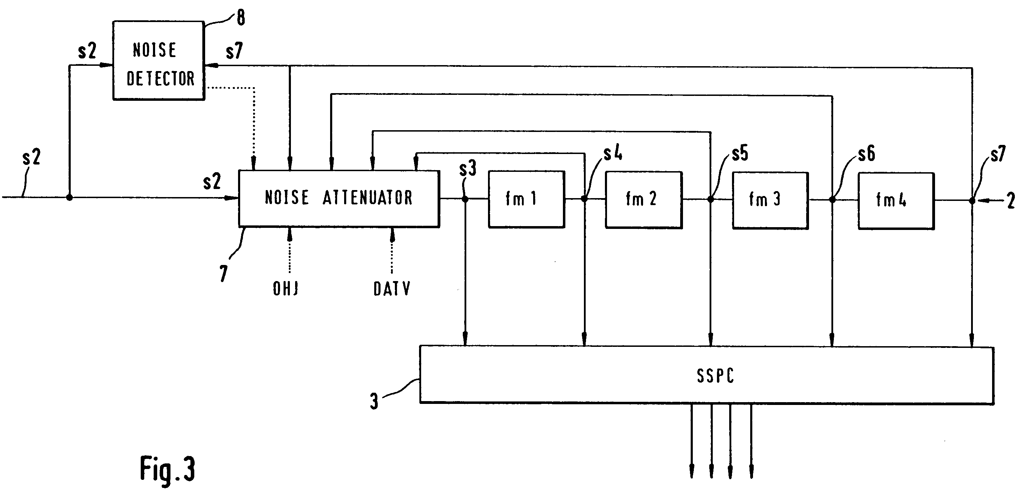

The design of a HD-MAC decoder of a prior art receiver is described above. Fig. 2 shows the main features of implementing the procedure of the invention using a signal entering the 80 ms branch. The noise attenuation according to the invention from a signal entering the 80 ms branch is accomplished in the HD-MAC decoder of the receiver in the BRD. The noise attenuator 7 is preferably located subsequent to the "line deshuffler" block 1 but prior to the Sub-Sample Pattern Converter block 3 (SSPC). The noise attenuator 7 may be positioned also before the "line deshuffler" block 1. In implementing the noise attenuator 7 the frame memories fm1-fm4 of the BRD are utilized (in Fig. 1 designated with reference numeral 2) so that for filtering the noise a delayed sample s4-s7 obtained from one or more frame memories fm1-fm4 is used in addition to the sample s2 being studied, or a sample s3 obtained from the output of the noise attenuator 7. The delayed samples s4-s7 in the frame memories fm1-fm4 have passed through the "line deshuffler" block 1 because of the structure of the BRD, and for this reason, it is best to place the noise attenuator 7 after the "line deshuffler" block 1 (and not before it), so that a "line deshuffling" function has also been performed for the signal s2 to be processed and entering one of the inputs of the attenuator 7, such as for samples s4-s7 obtained from frame memories fm1-fm4. The noise attenuator 7 includes preferably filters of two different types, whereby one of said filters can be used for filtering at least Gaussian noise and the other, at least drop-out noise. The noise attenuator 7, i.e. the filters contained therein, are controlled by means of an external control signal OHJ and a DATV signal DATV containing motion information. The functioning of the noise attenuator 7 is controlled with a control signal OHJ derived e.g. from the central processor unit (not shown), which processes the information obtained for instance from a terminal user connection or from a satellite receiver, or from a noise detector 8, as shown in Fig. 3, which detects the noise, type of noise from the image and evaluates the level thereof utilizing the information s4-s7 in the frame memories fm1-fm4, preferably samples (from frame memory fm4) of a signal s7 preceded/followed by four frame intervals. With the control signal OHJ the filters of the noise attenuator 7 and/or the frame processing are controlled and switched on/off. E.g., if an image contains a lot of noise, the peaking operation must be switched off because it emphasizes the noise in addition to the signal. Also the BRD interpolators can be controlled according to the quantity and type of noise.

The basic principle of noise detection is as follows. With the purpose that the motion content of an image should not impede the noise detection, the noise is estimated from the still image portions transmitted in the 80 ms branch. Owing to the MAC transmission system used, the same luminance pixels are repeated in the still image portions (80 ms branch) at the intervals of four transmitted frames. By comparing the content of two such signals s2 and s7 with one another, an estimate can be made about the amount of noise contained in the still image portions. If the noise in the image is relative small (Gaussian noise) the response pixels and the environments thereof differ only slightly. When statistic examination is carried out, e.g. by calculating the signal - noise ratio between the images, an estimate can be made on the noise level in comparison with the level of the signal. As the drop-outs differ significantly from the original pixel values, they can be detected by comparing two response pixels at a distance of four frame intervals from one another. If the pixels deviate strongly, one may assume that drop-out pulses are contained in the frame. The probability of drop-out pulses can be estimated by counting the number of drop-out pulses in the 80 ms blocks, and by proportioning the information with the number of the blocks.

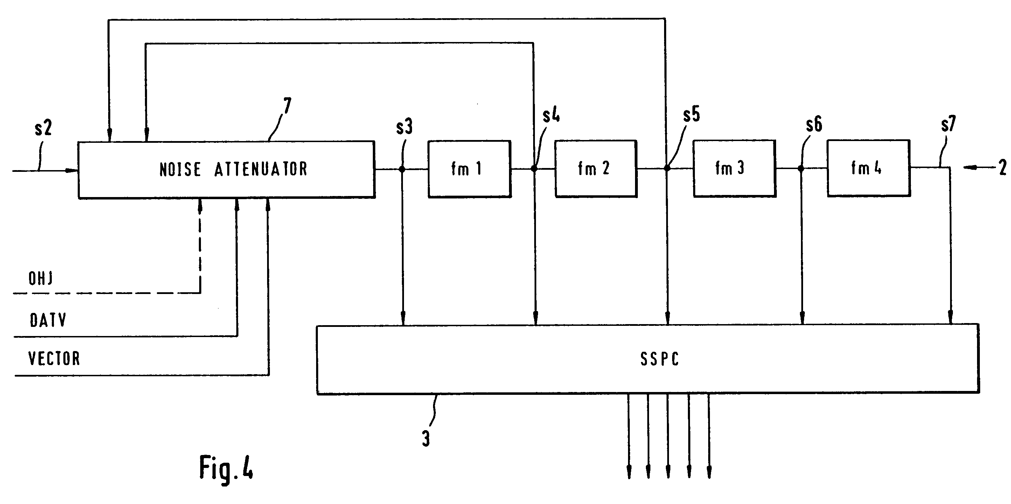

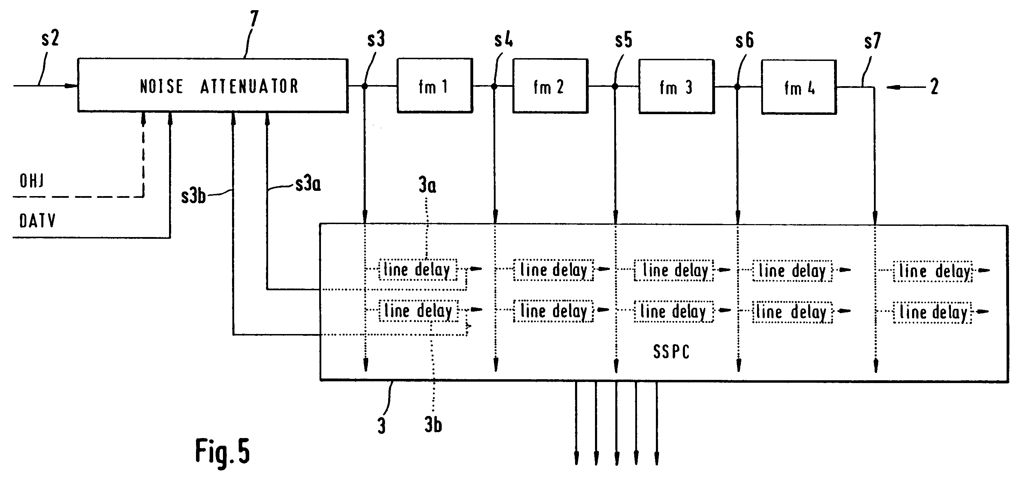

Figure 4 shows the main characteristic features of the implementation of the method according to the invention for a signal entering the 40 ms branch. In the noise filtering, from a signal entering the 40 ms branch the samples s4, s5 of a frame preceding or following by one or two frame intervals can be used, in addition to the sample s2 to be processed, said samples s4, s5 being obtained from the first / second frame memory fm1, fm2, as well as samples within the frame can be used, obtained from the SSPC 3, as shown in Fig. 5, in conjunction with the noise filtering of the signal entering the 20 ms branch. Thus, in filtering the noise of a signal entering the 40 ms branch, also the BRD frame memories 2 can be utilized. The noise filtering may also be carried out only spatially, whereby, in addition to the sample s2 to be processed, only samples within the frame, obtained from the SSPC 3, are used in the filtering. In Figure 4, in addition to the external control signal OHJ and the DATV signal DATV containing motion information, the motion vector information VECTOR entering the noise attenuator 7 is depicted. The motion vector information is transmitted along with the DATV signal, but in Fig. 4 it is depicted in separation in order to emphasize the use of vector information in filtering the noise of a signal entering the 40 ms branch because temporal information is used therein, in addition to the information within the frame, said temporal information being obtained with the aid of motion vectors from a preceding frame. For instance, Gaussian noise can be attenuated temporally by seeking a pixel equivalent to the pixel to be filtered from a preceding HD-MAC frame in the direction of the motion vectors and by carrying out the filtering with the aid of said samples. Elimination of the drop-out noise can be carried out e.g. so that a pixel to be processed is compared with the adjacency thereof both spatially and temporally. If a sample to be processed differs greatly from the immediate environment thereof, it is probably a drop-out pulse. In such case, the defective pixel in question is replaced by some adjacent samples or equivalent pixels obtained with the aid of the motion vectors from a preceding HD-MAC frame. The replacing pixel is so selected that the visual information is as little distorted as possible. In flat frame areas a replacing pixel can be selected among those above or below the pixel to be replaced. If, instead, the image contains small details, it is more useful, regarding the pictorial quality, to select a sample from the same line or from a preceding frame. One may assume that this type of filtering results in minor defects in the picture, therefore, the filtering is switched on, using an external control OHJ, only when drop-out signals are disturbingly visible in the picture.

Figure 5 shows the main characteristic features of the implementation of the method of the invention for a signal entering the 20 ms branch. In the noise filtering, from the signal entering the 20 ms branch, samples s3a, s3b within the frame, obtained from SSPC 3, can be used in addition to the sample s2 being processed. Said samples s3a, s3b are obtained from the output of the internal line memories 3a,3b connected with the output of the sound attenuator 7 of the SSPC. Thus, in filtering noise of a signal entering the 20 ms branch no frame memories 2 of the BRD are used; tead, the internal line memories 3a,3b of the SSPC only.

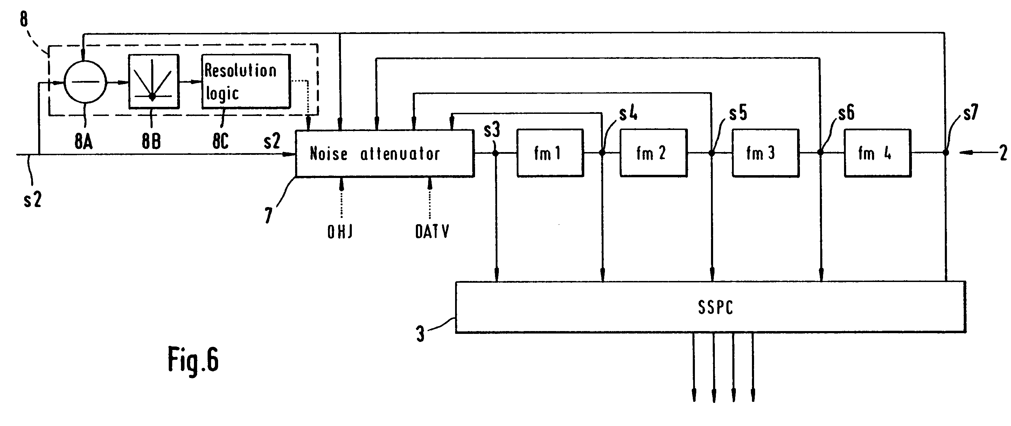

An example of a noise detector 8 is presented in Figure 6. First, the absolute difference abs (s7-s2) of the pixels s2 and s7 is calculated between the distance by two, four frames from each other in blocks 8A and 8B, and it is compared with two appropriately selected threshold values deviating from one another in block 8C. If the differential value abs (s7-s2) is lower than the lower threshold value, one may assume that Gaussian noise is present in the pixel to be processed, and the noise detector 8 switches on the filter eliminating Gaussian noise. If the differential value is higher than the higher threshold value, the frame contains at that point a drop-out pulse at a great probability, and the drop-out elimination filter is switched on. If the differential value remains in a range between two threshold values, neither of the filters is switched on for a signal transmitted by the 80 ms branch. With this act, it is ensured that the noise filters in no phase operate in the movement portions of the image.

The statistical information obtained from the noise detection carried out for a luminance signal transmitted in the 80 ms branch can also be used for controlling the attenuation of the noise of the luminance signals transmitted in the 40 ms and 20 ms branches. In the 20 ms branch, the filters of the noise attenuators must be spatial not to distort the motion content of the image. Since the spatial filters tend to deteriorate the minor details in the image, the functioning of the filters is controlled according to the noise type and the quantity of noise. The aim is to gain a compromise between the disturbing effect of the noise and the resolution of the image.

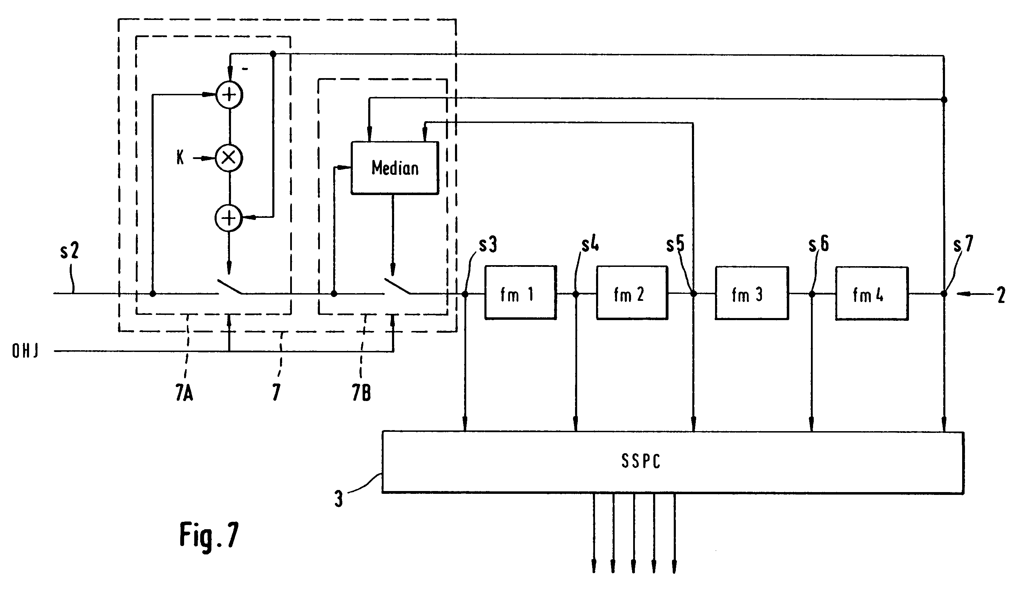

The drop-out filter of a luminance signal in the 80 ms branch is a temporal non-linear filter, for instance a temporal three-point median filter, and for carrying out the filtering, it needs four frame memories fm1-fm4 connected in cascade for obtaining right samples from the subsequent 80 ms intervals. An example of implementing a noise attenuator 7 is shown in Figure 7. First, the line frequency of the input signal s1 is raised in the "line deshuffler" block 1 (not shown) from 15.625 kHz to 31.25 kHz. Said output signal s2 is filtered with a non-linear drop-out filter 7B if the control signal OHJ obtained from the noise detector switches said filter on. If, instead, the noise detected is Gaussian noise, the control signal OHJ switches the linear filter 7A on, preferably a recursive linear filter.

In an exemplary embodiment of the 80 ms branch noise attenuator 7 shown in Fig. 7, a drop-out filter 7B receives for the input an input signal s2 and the respective samples s5 and s7 in the second frame memory fm2 and in the fourth frame memory fm4. The output signal s3 is obtained from the median pixel of samples s2, s5 and s7, said pixel being in turn fed to the frame memories fm1-fm4. The nonlinear filter 7B, preferably a three-point median filter, utilizes in filtering two pixels s5, s7 located temporally in one and same point in two successive images and an adjacent pixel of the image being processed forms the third pixel s2. The median activity usually yields the original pixel value s2 for the output s3, and thus the image has not changed. If, instead, one of the pixels to be filtered is a drop-out pulse, its value differs substantially from the other samples, and the median activity rejects said pixel. In the drop-out filtering of the type described in the present example problems occur when it is used in conjunction of such filters 7A which have strong recursive feedbacks because the strong feedback loop spreads the drop-out pulse into several images. Therefore, the drop-out pulses are not entirely dropped out and some drop-out noise is left in the image. In such instance the drop-out pulses are not always removed by the three-point median filters. As a result, a noise detector 8 should be used according to the invention for enhancing the image quality to make a decision whether the noise will be attenuated or whether the drop-out pulses will be filtered. There are instances in which neither noise attenuation should be carried out, nor filtering of drop-out pulses for maintaining the right motion steps.

In an embodiment example concerning a Gaussian noise filter 7A, shown in Fig. 7, signals s2 and s7 are fed as inputs of the filter 7A, and the filtering is carried out recursively, whereby the filter usually has a recursion coefficient K, its value being generally of different size for a movement image portion and a still image portion so that the noise is filtered as efficiently as possible from a still image portion and that the movement image portion should not be distorted because of the filtering.

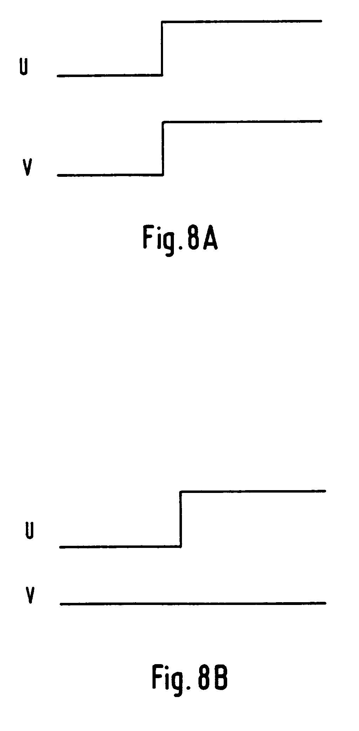

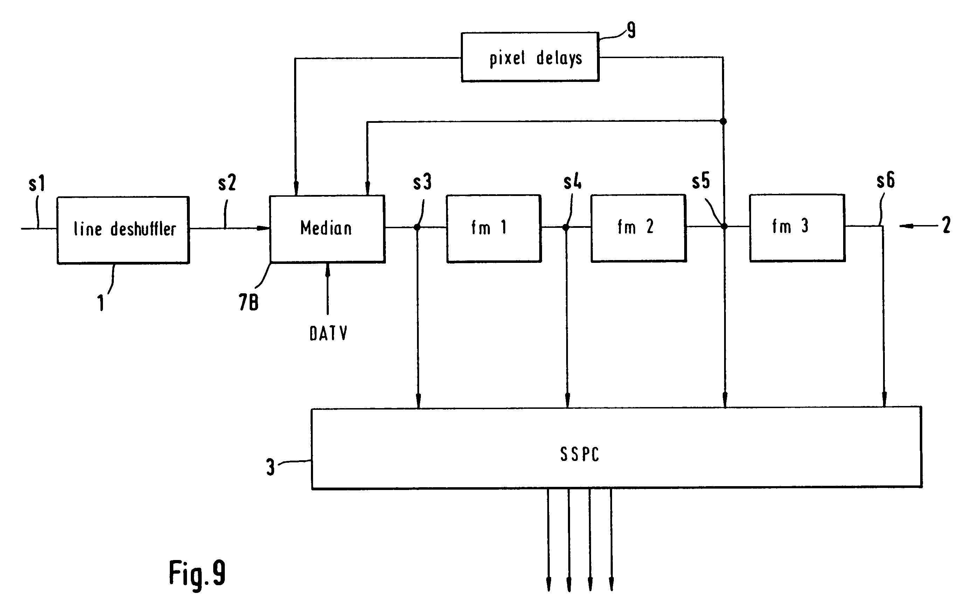

Noise detection for a luminance signal may also be used in conjunction with a chrominance decoder to control noise attenuation for a chrominance signal. Detection of chrominance noise may also be implemented on the basis of chrominance information only resembling the way related to the luminance signal. If the BRD is provided with less than four chrominance frame memories, the noise detection must be carried out by comparing samples existing in the same frame memory, e.g. pixels in the same line. If the pixels differ greatly from the environment thereof, they may be assumed to contain noise. Since the chrominance signals U and V in a MAC channel are transmitted on different lines, noise detection can be carried out separately for each component, and the noise detection can in this manner be ensured. The basic principle is as follows. If a change takes place in a U and V signal at one and same point (Fig. 8A), it is most probable that a detail in an image such as an edge is in question. If a remarkable change is taking place only one either of the components (Fig. 8B), one may assume that the change is due to the noise occurring at said point in the image. An example of a potential 80 ms branch chrominance drop-out discharge filter is presented in Fig. 9 in which an output signal s2 from the line deshuffler block, a sample s5 from the frame memory fm2, and a signal delayed relative to the position of the same sample are used for filtering. The filter need not preserve as many details of the chrominance components in noise attenuation as in luminance filtering because the most powerful impression of the image is produced from the luminance signal. A drop-out pulse in a frame as examined in example of Fig. 9 is replaced by an adjacent pixel from the same line. The even and odd lines are provided with different pixel delays 9 because the samples are located in different locations in even and odd lines. For instance, if a sample s2 to be processed is located in a fourth frame in location x in an odd line, the pixels located in locations x and x+2 in the second frame constitute the inputs s5 of the median filter 7B. Respectively, the pixels s5 from the second frame memory fm2 entering the even lines are in locations x and x-2. If filtering of this type is carried out for each of the components U and V in separation, the colour thus obtained changes slightly. The change can be eliminaed by detecting the level of the signal in each of the frames (in even and in odd). If the absolute difference of any adjacent pixels in comparison with the input sample is great, drop-out filtering is switched on.

The procedure of the invention is an efficient method for attenuating noise from a HD-MAC signal, with which procedure the image quality can be considerably improved. As taught by the invention, the noise is detected and attenuated and the drop-out pulses are eliminated. The method of the invention is described above as well as examples for implementing the method. The aim of the examples described herein is to demonstrate the invention, and the invention cannot be regarded as being limited to the embodiments described above, and it can be modified within the scope of the claims.

## Claims

1. A procedure for attenuating noise from HD-MAC signal in a HD-MAC receiver decoder, in which
- a received video signal is stored in memories (2),
- the samples stored in memories (2) are read and processed in a Sub-Sample Restoration circuit (3) containing line memories (3a, 3b) so that the original transmitted sub-sample pattern is produced,
- the sub-sample pattern thus produced is conducted into three signal preocessing branches (4,5,6), the first branch (5) thereof processing within the frame samples of substantially stationary image portions, the second branch (6) processing within the frame samples of slow-motion image portions, and the third branch (4) processing within the frame samples of rapid-motion image portions,
- the samples produced by one signal processing branch (4,5 or 6) are connected one at a time to the output of the decoder, with a switch (C) controlled by the motion information (DATV)
characterized in that noise is attenuated (7) from a video signal (s3) to be stored in the memories (2) by means of filtering, whereby
- after the sub-sampling, for filtering (7) the noise of a signal to be carried to the first signal processing branch (5), a received signal (s2) and at least one signal (s4-s7) obtained from the memories (2) are used,
- after the sub-sampling, for filtering (7) the noise of a signal to be carried to the second (6) and third (4) signal processing branch, a received signal (s2) and at least one signal (s3a,s3b) within the frame of the received signal (s2) obtained from the line memories (3a,3b) of the subsample restoration circuit (3) are used.

2. Procedure according to claim 1, characterized in that the filtering is controlled with an external control signal (OHJ) and motion information (DATV).

3. Procedure according to claim 1, characterized in that for filtering (7) the noise of a signal to be carried to the second signal processing branch (6), a signal (s4,s5) obtained from at least one frame memory (2) is moreover used.

4. Procedure according to claim 2, characterized in that noise is detected (8) from a video signal (s2) and, on the basis of said detection, the filtering is controlled with an external control signal (OHJ).

5. Procedure according to claim 4, characterized in that the received signal (s2) and the signal (24-27) stored in memories (2) are used for noise detection (8).

6. Procedure according to claim 5, characterized in that the received signal (s2) and signals (s7) preceding by four frame intervals are compared in the detection (8).

7. Procedure according to claim 5, characterized in that the received signal (s2) and signals (s7) subsequent to by four frame intervals are compared in the detection (8).

8. Procedure according to claim 4, characterized in that the noise detection (8) is carried out, controlled by the motion information (DATV), from signals conducted to the first signal processing branch (5), said signals comprising samples from substantially still image portions.

9. Procedure according to claim 1, characterized in that the filtering is nonlinear (7B).

10. Procedure according to claim 1, characterized in that the filtering is linear (7A).

11. Procedure according to claim 1, characterized in that the noise attenuation (7) is carried out as a separate process for the luminance and chrominance signals.

12. Procedure according to claim 4, characterized in that the noise detection (8) from a chrominance signal is carried out as a separate process for the U and V components, and the results of each detection being combined into information (OHJ) with which the noise attenuation of the chrominance signal is controlled.

13. A means for attenuating noise from a HD-MAC signal in a HD-MAC receiver decoder, said decoder comprising
- memories (2) in which a desired number of received samples can be stored,
- a Sub-Sample Pattern Converter circuit (3) including line memories (3a, 3b) to read samples stored in the memories (2) and to produce the original transmitted sub-sample patterns controlled by the motion information (DATV) related to the received signal indicating the motion of the image,
- three parallel signal processing branches (4,5,6) connected to the Sub-Sample Pattern Converter circuit (3), the first branch (5) thereof processing, within the frame, samples from substantially stationary image portions, the second branch (6) thereof processing, within the frame, samples from substantially slow-motion image portions, and the third branch (4) processing, within the frame, samples from rapid-motion image portions, and the sub-sample pattern produced in said signal processing branches is controlled by the motion information (DATV),
- a switch element (C) controlled by the motion information (DATV) to couple a signal produced by one of the signal processing branches (4,5 or 6) at a time to the output of the decoder,
characterized in that it comprises
- a noise attenuator (7) provided with at least one input and one output, and comprising at least one filter (7A,7B), and the output whereof being connected to the input of the memories (2), and the input thereof being a received video signal (s2), and, in filtering the signal entering the first processing branch (5), at least one signal (s4-s7) obtained from the memories, and in filtering the signal entering the second (6) and third (4) signal processing branches, at least one signal (s3a,s3b) obtained from the line memories (3a,3b) of the Sub-Sample Pattern Restoration circuit (3).

14. Means according to claim 13, characterized in that the noise attenuator (7) is controlled with the motion information (DATV) and the external control signal (OHJ).

15. Means according to claim 13, characterized in that the input of the filter (7A,7B) in filtering (7) a signal to be taken into the second signal processing branch (6) is moreover a signal (s4,s5) obtained from at least one of the frame memories (2).

16. Means according to claim 14, characterized in that an external control signal (OHJ) is coupled to the noise attenuator (7) from the central processor unit of the television receiver.

17. Means according to claim 14, characterized in that it comprises a noise detector (8) to control the noise attenuator with an external control signal (OHJ).

18. Means according to claim 17, characterized in that the input of the noise detector (8) is a received signal (s2) and a signal (s4-s7) received from the output of at least one of the memories (2).

19. Means according to claim 18, characterized in that the input of the noise detector (8) is a received signal (s2) and a signal (s4-s7) received from the output of a fourth memory (fm4) of the memories (2) connected in series.

20. Means according to claim 13, characterized in that the noise attenuator (7) comprises a nonlinear filter (7B).

21. Means according to claim 13, characterized in that the noise attenuator (7) comprises a linear filter (7B).
